# EUROPÄISCHE PATENTSCHRIFT

(11) **EP 1 502 164 B1**
(45) Veröffentlichungstag und Bekanntmachung des Hinweises auf die Patenterteilung: **30.07.2008**
(21) Anmeldenummer: 03722300.5
(22) Anmeldetag: 02.05.2003
(51) Int. Cl.: G05B 19/042

(54) **Verfahren ZUR UNTERSTÜTZUNG EINER PLANUNG UND REALISIERUNG EINES AUTOMATISIERTEN TECHNISCHEN PROZESSES**
Method FOR SUPPORTING PLANNING AND PRODUCING AN AUTOMATED TECHNICAL PROCESS
Méthode POUR ASSISTER LA PLANIFICATION ET LA MISE EN PLACE D'UN PROCESSUS TECHNIQUE AUTOMATISE

(30) Priorität: 03.05.2002 DE 10219912
(43) Veröffentlichungstag der Anmeldung: 02.02.2005
(73) Patentinhaber: SIEMENS AKTIENGESELLSCHAFT, 80333 München (DE)
(72) Erfinder: TEN BRINK, Carsten, 48455 Bad Bentheim (DE)
(86) Internationale Anmeldenummer: PCT/DE2003/001403
(87) Internationale Veröffentlichungsnummer: WO 2003/093911

(56) Entgegenhaltungen:
- EP-A- 0 770 945
- DE-A- 3 911 465
- DE-A- 19 630 415
- DE-A- 19 917 102

## Beschreibung

Die Erfindung betrifft ein Verfahren zur Unterstützung einer Planung und Realisierung eines automatisierten technischen Prozesses unter Verwendung eines solchen Automatisierungswerkzeugs.

Bekannt sind diverse, teilweise auch objektorientierte Programmiersprachen, mit deren Hilfe Programme zur Steuerung und/oder Überwachung eines automatisierten technischen Prozesses erstellt werden. Solche Programmiersprachen und die im Zusammenhang mit deren Einsatz verwendbaren so genannten Entwicklungsumgebungen kommen jedoch erst in einem relativ späten Stadium bei der Planung und Realisierung eines automatisierten technischen Prozesses zum Einsatz. Tatsächlich ist das Erstellen eines Steuerprogramms mit Hilfe solcher Programmiersprachen oder Entwicklungsumgebungen der letzte Schritt bei der Planung und Realisierung eines automatisierten technischen Prozesses. Zuvor hat bereits ein Technologe das jeweilige Produkt in Bezug auf erforderliche Ausgangsprodukte oder -stoffe festgelegt und ein Konstrukteur die zu dessen Herstellung erforderlichen Vorrichtungen wie Maschinen, Behältnisse, Fördermittel, etc. ausgewählt. Das Steuerprogramm wird demnach von einem Automatisierer anhand von Informationen erstellt, die der Technologe und der Konstrukteur zur Verfügung stellen.

Aus der WO 97/12301 ist ein Entwurfsverfahren für die Anlagentechnik und ein rechnergestütztes Projektierungssystem zur Verwendung bei diesem Verfahren bekannt geworden. Dabei wird davon ausgegangen, dass sich für die Automatisierung von Industrieanlagen die Technologie der Anlage durch Prozesstechnik einerseits sowie durch Leittechnik andererseits beschreiben lässt und es werden aus Modellen des Prozesses und der Leittechnik verfahrenstechnische Objekte gebildet, die in einem rechnergestützten Projektierungssystem verarbeitet werden, woraus ineinander verzahnte Modelle mit Steuerung und/oder Regelung und/oder Simulation einschließlich Störungsanalyse erzeugt werden. Beim zugehörigen Projektierungssystem erfolgt mit einem Rechner gleichermaßen ein Zugriff auf eine Komponentenbibliothek von verfahrenstechnischen Elementen und auf eine Beschreibung der Elemente der konkreten Anlage aus der Sicht eines verfahrenstechnischen Technologen.

Aus der DE 196 30 415 ist ein Software-Werkzeug zur Planung einer prozessleittechnischen Anlage sowie ein Software-Werkzeug zur Formulierung einer zu lösenden Steuerungsaufgabe in Form einer Programmiersprache für Automatisierungs- und Bedien-/Beobachtungsgeräte bekannt. Die Software-Werkzeuge sind dabei derart ausgebildet, dass phasenübergreifende Daten automatisch aktualisiert werden, wodurch die Konsistenz der Daten projektweit gewährleistet ist. Dadurch wird ein phasenübergreifendes Engineering ermöglicht.

Nachteilig bei diesem bekannten Vorgehen und entsprechend bei der Verwendung bekannter Programmiersprachen, Entwicklungsumgebungen, etc. ist jedoch, dass eine Übermittlung von Informationen von einem Spezialisten zum nächsten Spezialisten erforderlich ist und dass bei einer solchen Übermittlung häufig Informationen verloren gehen oder verfälscht werden, weil jeder Spezialist in einer eigenen Denkwelt zu Hause ist und einen eigenen Sprachgebrauch pflegt.

Der Erfindung liegt daher die Aufgabe zugrunde, die oben genannten Nachteile zu vermeiden.

Gelöst wird diese Aufgabe mit einem Verfahren mit den Merkmalen des Anspruchs 1. Danach ist erfindungsgemäß ein Verfahren zur Unterstützung einer Planung und Realisierung eines automatisierten technischen Prozesses unter Verwendung eines Automatisierungswerkzeugs, das Zugriff auf eine Bibliothek mit einer Anzahl vordefinierter, mit einer Funktionalität eines technischen Prozesses assoziierter Basisobjekttypen hat, vorgesehen, wobei mit dem Automatisierungswerkzeug Instanzen der Basisobjekttypen erzeugt und gemäß den Erfordernissen des technischen Prozesses geeignet untereinander verknüpft werden, wobei durch das Automatisierungswerkzeug aus den instanziierten Basisobjekttypen eine Strukturinformation in Bezug auf den technischen Prozess abgeleitet wird. Zur Ableitung der Strukturinformation können ergänzend die Verknüpfungen der Instanzen der Basisobjekttypen untereinander ausgewertet werden.

Die Erfindung geht dabei von der Erkenntnis aus, dass vor einer automatisierten Herstellung eines Produktes ein erheblicher Aufwand zur Einrichtung des entsprechenden automatisierten technischen (Fertigungs-)Prozesses unternommen werden muss. Es werden Fertigungs- und Automatisierungsspezialisten - im Folgenden als Konstrukteur bzw. Automatisierer bezeichnet - benötigt. Diese erhalten Vorgaben von weiteren Spezialisten - im Folgenden als Technologen bezeichnet -, welche die Charakteristika des Produktes festlegen.

Der Technologe ist der Planer des jeweiligen Produktes und erstellt z. B. das Modell eines Kraftfahrzeugs in Form einzelner Karosserieteile mit Schweiß- oder sonstigen Verbindungspunkten oder das Rezept für ein Arzneimittel. Ihm ist eine Denkweise zu eigen, die sich im Wesentlichen an Produkteigenschaften, Marktgegebenheiten, Wettbewerb, Wirtschaftlichkeit, etc. orientiert. Daneben sind für den Technologen Kriterien wie Produktionszeiten, Produktionskosten und Produktinnovationen wichtige Einflussfaktoren.

Der Konstrukteur ist der Planer der Fertigungseinrichtung. Er sieht Maschinen und Geräte vor, welche die Karosserieteile transportieren oder handhaben und miteinander verbinden oder die Ausgangsstoffe des Arzneimittels bereitstellen, mischen und chemisch oder thermisch beeinflussen. Ihm ist eine Denkweise zu eigen, die sich im Wesentlichen an physikalischen Abläufen oder physikalischen Größen orientiert. In seine Überlegungen bezieht der Konstrukteur Gegenstände wie Anlagen(-teile), (Rohr-)Leitungen und (Ausgangs-)Stoffe oder deren Bewegungen oder Beweglichkeit ein.

Der Automatisierer plant die Automatisierung des sich ergebenden technischen Prozesses. Er erstellt ein Steuerungsprogramm, unter dessen Einfluss die Maschinen oder Geräte den Transport und die Behandlung der Ausgangsstoffe oder -produkte derart beeinflussen, dass schließlich das Produkt gefertigt wird. Ihm ist eine Denkweise zu eigen, die sich im Wesentlichen an digitalen Größen und abgeschlossenen Zuständen oder kleineren, für sich unabhängigen Einheiten orientiert. Er bezieht in seine Überlegungen Steuerungsfunktionen, Zeitabläufe, Antriebe und Antriebsmöglichkeiten, Positionen von bewegten oder beweglichen Komponenten im Prozess und Zustände des Prozesses ein. Dem Automatisierer ist die Verwendung so genannter Zustandsgraphen geläufig, so dass er gewohnt ist, den technischen Prozess in separierbare Teilprozesse zu unterteilen, denen er sich sukzessive widmet. Seine Denkweise ist damit eher auf Details als auf die Gesamtzusammenhänge des technischen Prozesses ausgerichtet.

Zwischen den einzelnen Spezialisten sind umfangreiche Abstimmungen erforderlich. Diese erfolgen zumindest jeweils zwischen Technologe und Konstrukteur einerseits und zwischen Konstrukteur und Automatisierer andererseits. Durch die Verteilung der Aufgaben auf mehrere Spezialisten mit unterschiedlichen Denkweisen, die bisher je für sich und ihr Aufgabengebiet unterschiedliche Automatisierungswerkzeuge nutzen, ergeben sich umfangreiche Probleme, von denen nachfolgend nur einige exemplarisch genannt werden sollen und die mit der Erfindung vermieden werden.

Zuvorderst ergeben sich Kommunikationsprobleme zwischen den beteiligten Spezialisten, und zwar im Wesentlichen aufgrund deren unterschiedlicher Sprachwelt. Die Kommunikation findet daher vornehmlich anhand von transformierten Informationen statt, d. h., der Konstrukteur versucht, wenn er den Automatisierer auf Besonderheiten einer Mechanik aufmerksam machen will, sich in dessen Denkweise hinein zu versetzen und diesem das Problem in dessen Sprache verständlich zu machen. Wenn der Konstrukteur nicht seinerseits diese Transformation vornimmt, sondern dem Automatisierer das Problem in seiner Sprache schildert, nimmt der Automatisierer die Transformation vor, indem er das Gehörte oder Gelesene in Bezug auf die ihm eigene Denkweise transformiert. Das Beispiel lässt sich selbstverständlich auf jede mögliche und sinnvolle Kommunikation zwischen den beteiligten Spezialisten ausweiten.

Die Folge solcher permanent erforderlicher Transformation von Information ist ein Informationsverlust, weil z. B. Informationen, die der Technologe dem Konstrukteur weitergibt und die für diesen nicht weiter von Bedeutung sind, möglicherweise gar nicht und wenn überhaupt nur reduziert oder gar verfälscht vom Konstrukteur an den Automatisierer weitergegeben werden. Solche Informationsverluste führen fast zwangsläufig zu Inkonsistenzen der jeweils verwendeten Daten. Daneben ergibt sich aufgrund häufig erforderlicher Abstimmungen und Durchsprachen ein latentes Terminproblem für die beteiligten Spezialisten sowie ein nicht unerheblicher Zeitverlust.

Der Vorteil der Erfindung besteht darin, dass die Verwendung einer begrenzten Anzahl vordefinierter Basisobjekttypen eine quasi-automatische Strukturermittlung ermöglicht. Durch die Instanziierung ausgewählter Basisobjekttypen und deren Verknüpfung untereinander wird eine automatisch analysierbare Beschreibung des technischen Prozesses auf bestimmten Abstraktionsstufen bereitgestellt. Andere denkbare Beschreibungen des technischen Prozesses - etwa natürlichsprachlich - erfordern Analysefunktionalitäten im Sinne einer zunächst syntaktischen und semantischen und anschließend logischen, auf Realisierbarkeitsaspekte abgestellten Analyse, die heute noch nicht oder nicht in ausreichendem Umfang zur Verfügung stehen. Dadurch, dass jeder Basisobjekttyp mit einer Funktionalität eines technischen Prozesses assoziiert ist, ist mit der Instanziierung eines solchen Basisobjekttyps unmittelbar, nämlich aufgrund der Typinformation der jeweiligen Instanz oder des zugrunde liegenden Basisobjekttyps, die repräsentierte Funktionalität bekannt, ohne dass es weitergehender Analysen bedürfte. Durch die Verknüpfung einzelner Instanzen von Basisobjekttypen untereinander steht ferner deren Wirkzusammenhang fest. Die Gesamtheit der zur Verfügung stehenden Basisobjekttypen ist in an sich bekannter Weise in einer Bibliothek zusammengefasst, auf die das Automatisierungswerkzeug Zugriff hat. Eine Instanz eines Basisobjekttyps oder ein instanziierter Basisobjekttyp wird im Folgenden kurz als Objekt bezeichnet.

Die abhängigen Ansprüche sind auf bevorzugte Ausführungsformen der vorliegenden Erfindung gerichtet.

Vorteilhaft sind als Strukturinformation eine erste Strukturinformation mit Hinblick auf die im technischen Prozess ver-oder bearbeiteten Ausgangsstoffe oder Materialien sowie die Vorrichtungen zu deren Aufnahme und Transport und eine zweite Strukturinformation mit Hinblick auf die Beeinflussbarkeit solcher Vorrichtungen durch eine Steuerung vorgesehen.

Die erste Strukturinformation wird z. B. aus den vom Technologen instanziierten Basisobjekttypen abgeleitet. Wenn der Technologe zwei Instanzen eines Basisobjekttyps zur Repräsentation eines flüssigen Ausgangsstoffs anlegt, lässt sich daraus als Strukturinformation bereits ableiten, dass für jeden flüssigen Ausgangsstoff zumindest jeweils ein Behältnis benötigt wird. Wenn der Technologe weiter eine Instanz eines Basisobjekttyps zur Repräsentation der verfahrenstechnischen Maßnahme des Mischens anlegt, lässt sich daraus die ergänzende Strukturinformation ableiten, dass zum Durchführen der Maßnahme des Mischens ebenfalls ein geeignetes Behältnis benötigt wird. Wenn der Technologe die beiden die Ausgangsstoffe repräsentierenden Objekte mit dem die Maßnahme des Mischens repräsentierenden Objekt verbindet oder verknüpft, ergibt sich die ergänzende Strukturinformation, dass beide flüssigen Ausgangsstoffe miteinander vermischt werden sollen. Wenn der Technologe schließlich in der Verbindung zwischen einem einen Ausgangsstoff repräsentierenden Objekt und dem die verfahrenstechnische Maßnahme des Mischens repräsentierenden Objekt ein weiteres Objekt zur Repräsentation der verfahrenstechnischen Maßnahme des Heizens vorsieht, ergibt sich weiter die Strukturinformation, dass einer der Ausgangsstoffe vor dem Mischen erwärmt werden soll.

Die zweite Strukturinformation wird z. B. aus den vom Konstrukteur oder automatisch vom Automatisierungswerkzeug selbst instanziierten Basisobjekttypen abgeleitet. Wenn der Konstrukteur einem Behälter, in dem ein Ausgangsmaterial bevorratet wird und aus dem es gesteuert abgezogen werden soll, ein Ventil, eine Schnecke, o.ä. zuordnet, ergibt sich daraus die Strukturinformation, dass mit z. B. einem solchen Ventil eine steuerbare Vorrichtung vorhanden ist, der zwei Prozesszustände zugeordnet sind (offen, geschlossen), und dass eine solche Vorrichtung auf zwei Arten angesteuert werden kann (öffnen, schließen).

Vorteilhaft umfasst die Bibliothek als Basisobjekttypen erste Basisobjekttypen, die vor der Ableitung der ersten Strukturinformation, zweite Basisobjekttypen, die vor der Ableitung der zweiten Strukturinformation, und dritte Basisobjekttypen, die nach der Ableitung der zweiten Strukturinformation instanziierbar sind. Damit ergibt sich eine strukturelle Trennung zwischen den zur Verfügung stehenden Basisobjekttypen. Der Technologe verwendet die ersten Basisobjekttypen. Daraus wird die erste Strukturinformation gewonnen. Darauf und auf ggf. automatisch erzeugten Instanzen der zweiten Basisobjekttypen baut der Konstrukteur zur weiteren Beschreibung des technischen Prozesses auf. Er verwendet dabei die zweiten Basisobjekttypen. Dies bildet die Basis für die zweite Strukturinformation. Hierauf und auf ggf. automatisch erzeugten Instanzen der dritten Basisobjekttypen baut der Automatisierer zur abschließenden Beschreibung des technischen Prozesses auf. Der Automatisierer verwendet die dritten Basisobjekttypen.

Zu jedem instanziierten Basisobjekttyp kann vorteilhaft eine durch den jeweiligen Basisobjekttyp vorgegebene Anzahl von Attributen bedarfsweise mit einem Wert und einem Darstellungsformat versehen werden. Solche Attribute erleichtern z. B. die Unterscheidbarkeit ansonsten identischer Instanzen ein und desselben Basisobjekttyps, wenn in einem zur Bezeichnung vorgesehenen Attribut eine Klartextbezeichnung wie z. B. "Ventil Mischerboden" o.ä. angegeben wird. Des Weiteren können z. B. Materialeigenschaften eines Ausgangsstoffes oder Dimensionen eines Behältnisses zur Bevorratung eines Ausgangsstoffes oder Zustände oder Beeinflussungsmöglichkeiten einer steuerbaren Vorrichtung, wie z. B. eines Ventils an einer solchen Vorrichtung, als Attribut vorgesehen sein. Durch die dauerhafte Zuordnung solcher Attribute zur jeweiligen Instanz eines Basisobjekttyps bleibt die Zuordnung von Daten zum jeweiligen Element, sei es nun ein Ausgangsstoff, ein Behältnis, ein Ventil o.ä., des technischen Prozesses jederzeit erhalten. Jedem Attribut kann ein Darstellungsformat zugeordnet werden, so dass z. B. Zahlenwerte mit zwei oder vier Nachkommastellen angezeigt oder in Dezimal- oder Hexadezimaldarstellung angezeigt werden.

Vorteilhaft erfolgt eine Auswahl und Instanziierung der ersten, zweiten und dritten Basisobjekttypen und deren Verknüpfung untereinander jeweils in einer ersten, zweiten und dritten Sicht. Eine Sicht ist eine Darstellung am Anzeigegerät, also z. B. am Bildschirm. Damit kann für jeden Spezialisten zur Verwendung des Automatisierungswerkzeugs eine eigene Sicht, eine individuelle Darstellung, vorgesehen werden. Bei einer solchen jeweils eigenen Sicht werden z. B. dem Technologen keine Basisobjekttypen zur Auswahl und Instanziierung präsentiert, die normalerweise nur der Konstrukteur oder Automatisierer verwenden würde. Damit ergibt sich für jeden Spezialisten eine übersichtliche Arbeitsumgebung, die auf diejenigen Details reduziert ist, die er zur Erfüllung seiner jeweiligen Aufgaben benötigt.

Wenn mit oder durch Auswahl eines Darstellungsformates auch die Sichtbarkeit eines Attributes in der ersten, zweiten oder dritten Sicht festgelegt wird, kann einfach z. B. mittels einer Maskierungsoperation eine Anzeige oder eine Unterdrückung einer Anzeige eines Attributes beeinflusst werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:
- FIG 1: eine schematische Darstellung eines technischen Prozesses,
- FIG 2: eine schematische Darstellung eines Automatisierungswerkzeugs und
- FIG 3 bis FIG 6: Darstellungen von Ansichten einer Bildschirmdarstellung des Automatisierungswerkzeugs.

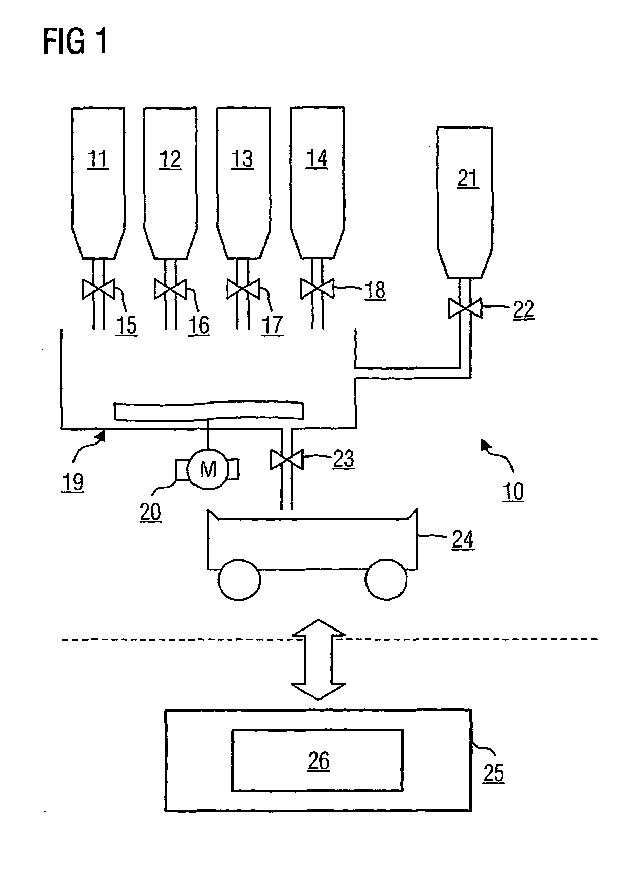

FIG 1 zeigt einen technischen Prozess 10, und zwar am Beispiel einer schematisch dargestellten Porenbetonmischanlage. Der technische Prozess 10 umfasst einen Zement- 11, Kalk- 12, Sandschlamm- 13 und Wasserbehälter 14 zur Aufnahme jeweils der wesentlichen Ausgangsstoffe für die Herstellung von Porenbeton. Jeder Ausgangsstoff kann durch Ansteuerung eines dem jeweiligen Behälter 11, 12, 13, 14 zugeordneten Ventils 15, 16, 17, 18 abgezogen werden. Die Ausgangsstoffe gelangen dann in einen Mischer 19 mit einem Mischermotor 20. Dieser treibt einen am Boden des Mischers 19 angeordneten Mischerflügel an. Durch einen Betrieb des Mischermotors 20 werden die Ausgangsstoffe im Mischer 19 vermischt. Als weiterer Ausgangsstoff wird in einem Aluminiumbehälter 21 Aluminium bereitgehalten, das kurz vor Ende des Mischvorgangs durch Ansteuerung des am Aluminiumbehälter angeordneten Ventils 22 abgezogen wird und dabei ebenfalls in den Mischer 19 gelangt. Nach Abschluss des Mischvorgangs wird ein Mischerbodenventil 23 geöffnet, so dass die vermischten Ausgangsstoffe in eine Form 24 gelangen und dort aufgrund der exothermen Reaktion des Ausgangsstoffs Kalk und im Wesentlichen beeinflusst durch die chemische Reaktion des Ausgangsstoffs Aluminium aufquellen, so dass sich schließlich die bekannte Porenstruktur des Porenbetons ergibt.

Der technische Prozess 10 wird in an sich bekannter Weise durch eine Steuerung 25 gesteuert und/oder überwacht. Die Steuerung 25 ist dabei z. B. eine einzelne speicherprogrammierbare Steuerung oder ein einzelner Prozessrechner oder ein einzelnes dezentrales Peripheriegerät oder dergleichen oder aber ein Verbund solcher Geräte, die untereinander z. B. über einen Feldbus vernetzt sind. Die Steuerung 25 steuert und/oder überwacht den technischen Prozess 10 nach Maßgabe eines Steuerprogramms 26, das in an sich bekannter Weise in einem nicht separat dargestellten Speicher der Steuerung 25 gespeichert ist.

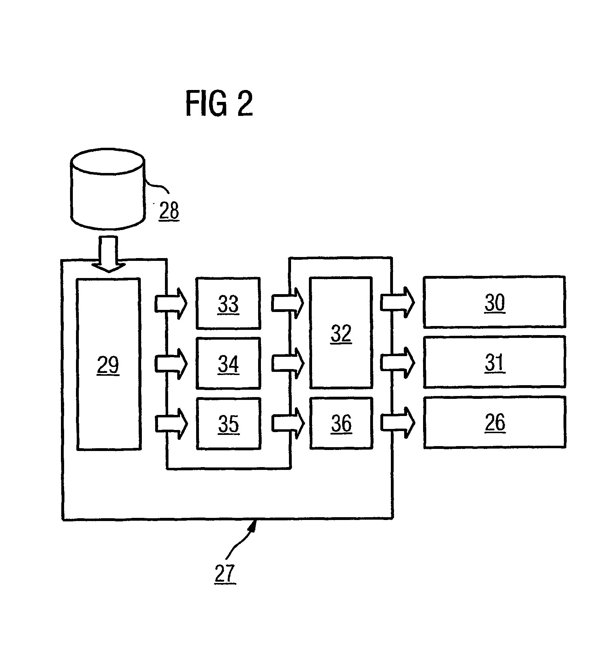

Am Beispiel dieses soeben nur in den Grundzügen skizzierten technischen Prozesses 10 soll im Folgenden das Automatisierungswerkzeug 27 (FIG 2) zur Unterstützung einer Planung und Realisierung eines solchen oder ähnlichen automatisierten technischen Prozesses 10 sowie das Verfahren zur Unterstützung einer Planung und Realisierung eines automatisierten technischen Prozesses 10 unter Verwendung eines solchen Automatisierungswerkzeugs beschrieben werden. Der technische Prozess 10, so wie er in FIG 1 dargestellt ist, ist dabei das Ergebnis und nicht der Ausgangspunkt einer solchen Planung und Realisierung.

Ausgangspunkt einer solchen Planung und Realisierung ist vielmehr das Spezialwissen eines Technologen, der weiß, aus welchen Ausgangsstoffen Porenbeton hergestellt wird und wie diese Ausgangsstoffe zu handhaben sind. Anhand seiner Kenntnisse erstellt der Technologe eine Beschreibung des technischen Prozesses auf einer ersten Abstraktionsstufe. Ausgehend von dieser Beschreibung konkretisiert ein Konstrukteur die vom Technologen bereitgestellten Informationen im Hinblick auf zu verwendende Vorrichtungen und Geräte, wie z. B. Behälter, Rohrleitungen, Ventile, etc. Damit liegt eine Beschreibung des technischen Prozesses 10 auf einer nächsthöheren Abstraktionsstufe vor. Ausgehend von dieser Beschreibung konkretisiert ein Automatisierer die bisher vorliegenden Informationen im Hinblick auf zu verwendende Steuerungsfunktionalitäten. Nachfolgend werden die Maßnahmen der jeweiligen Spezialisten bei der Planung und Realisierung am Beispiel des technischen Prozesses 10 der Porenbetonherstellung näher erläutert. Anstelle des technischen Prozesses 10 der Porenbetonherstellung kommt entsprechend auch jeder andere technische Prozess in Betracht.

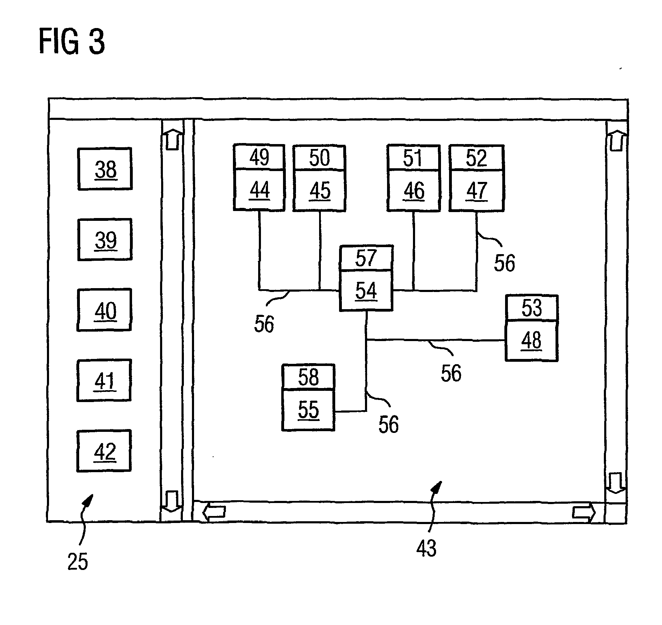

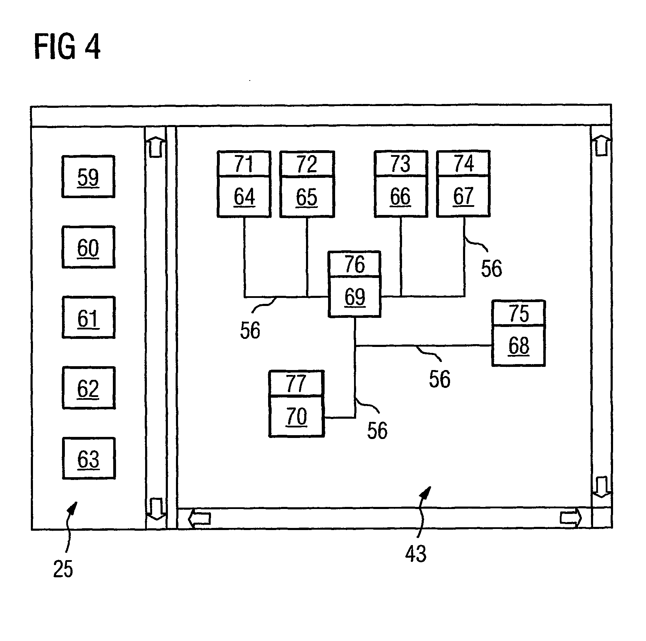

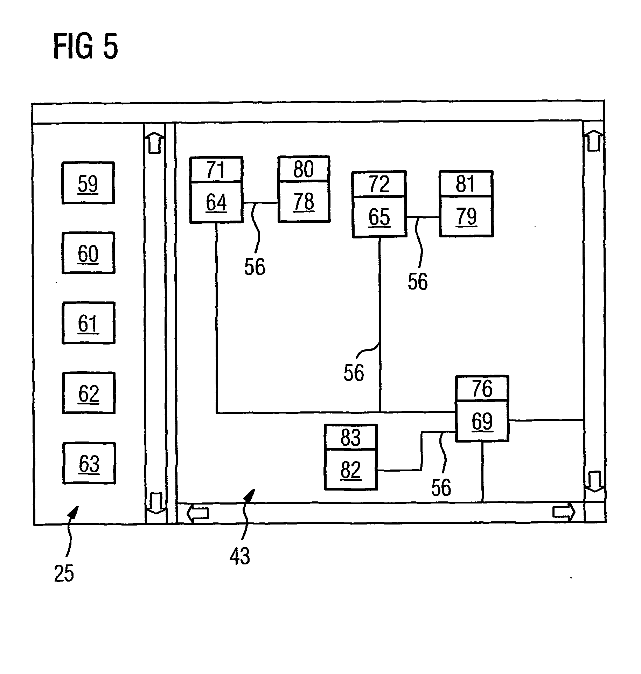

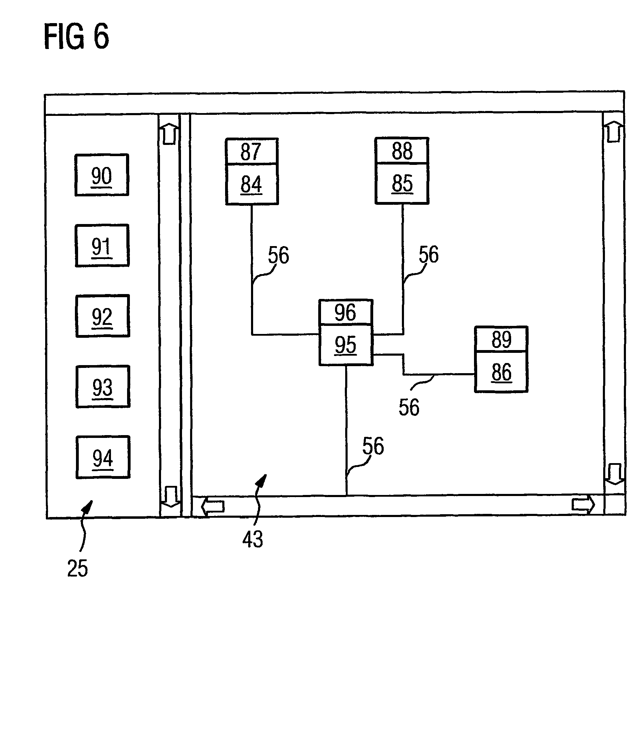

FIG 2 zeigt einen Inhalt eines nicht näher dargestellten Speichers eines an sich bekannten Automatisierungsgerätes. Als Automatisierungsgerät kommt ein Programmiergerät, ein Personal Computer, ein Prozessrechner, ggf. sogar eine speicherprogrammierbare Steuerung oder dergleichen in Betracht. Im Speicher ist das Automatisierungswerkzeug 27 als Softwareprogramm abgespeichert. Das Automatisierungswerkzeug 27 greift in an sich bekannter Weise auf eine Bibliothek 28 mit einer Anzahl vordefinierter, mit einer Funktionalität des technischen Prozesses 10 assoziierten Basisobjekttypen 38 - 42 (FIG 3); 59 - 63 (FIG 4, 5); 90 - 94 (FIG 6) zu. Zum Instanziieren, d. h. Erzeugen, und untereinander Verknüpfen von Instanzen der Basisobjekttypen 26 - 30; 47 - 51; 78 - 82 weist das Automatisierungswerkzeug 27 eine erste Funktionalität 29 auf. Zum Ableiten einer Strukturinformation 30, 31 aus einer Typinformation jedes instanziierten Basisobjekttyps 38 - 42; 59 - 63; 90 - 94 ist eine zweite Funktionalität 32 vorgesehen.

Aus einer ersten Instanziierung einer Anzahl 33 erster Basisobjekttypen 38 - 42 wird als Strukturinformation 30, 31 eine erste Strukturinformation 30 mit Hinblick auf die im technischen Prozess 10 ver- oder bearbeiteten Ausgangsstoffe oder Materialien und mit Hinblick auf Vorrichtungen zu deren Aufnahme und Transport abgeleitet. Zu der ersten Strukturinformation 30 werden eine Anzahl 34 zweiter Basisobjekttypen 59 - 63 instanziiert. Aus dieser zweiten Instanziierung einer Anzahl 34 der zweiten Basisobjekttypen 59 - 63 wird als Strukturinformation 30, 31 eine zweite Strukturinformation 31 mit Hinblick auf die Beeinflussbarkeit solcher Vorrichtungen durch die Steuerung 25 abgeleitet. Zu der zweiten Strukturinformation 31 wird eine Anzahl 35 dritter Basisobjekttypen 90 - 94 instanziiert. Aus den Instanzen dieser dritten Basisobjekttypen 90 - 94 wird das Steuerprogramm 26 abgeleitet, das zur Steuerung und/oder Überwachung des technischen Prozesses 10 in die Steuerung 25 transferiert wird. Das Ableiten des Steuerprogramms 26 erfolgt mittels einer dritten Funktionalität 36 des Automatisierungswerkzeugs 27, die aus den Instanzen der dritten Basisobjekttypen 90 - 94 diejenigen Daten, z. B. Prozessein- und -ausgänge repräsentierende Daten und Programme oder Programmfragmente repräsentierende Daten, extrahiert und in Form des jeweiligen Steuerprogramms 26 kombiniert. Daneben umfasst das Automatisierungswerkzeug 27 an sich bekannte und nicht gesondert dargestellte Funktionalitäten zum Bedienen eines gleichfalls nicht dargestellten Anzeigegerätes, wie einen Bildschirm, eine Funktionalität zum Darstellen instanziierter Basisobjekttypen 38 - 42; 59 - 63; 90 - 94 auf dem Anzeigegerät, eine Funktionalität zum Bedienen von nicht dargestellten Eingabegeräten, wie einer Tastatur und/oder einer Maus, etc.

Die einzelnen Funktionalitäten 29, 32, 36 des Automatisierungswerkzeugs 27, wie die erste Funktionalität 29 zum Auswählen und Instanziieren eines bestimmten Basisobjekttyps, sind für sich genommen bekannt. Die Funktionalität zum untereinander Verknüpfen von Instanzen der Basisobjekttypen kann in ähnlicher Weise realisiert werden, wie dies z. B. von Entwicklungsumgebungen zur Erstellung von Programmen in Funktionsplandarstellung bekannt ist. Bei der Funktionsplandarstellung werden auch Ausgänge einzelner Funktionsplanelemente mit z. B. Eingängen anderer Funktionsplanelemente verknüpft.

Die zweite Funktionalität 32 zum Ableiten der Strukturinformation 30, 31 aus den jeweiligen Typinformationen der instanziierten Basisobjekttypen erfolgt z. B. anhand einer nicht dargestellten Liste, in der beim Instanziieren eines jeden Basisobjekttyps dessen Typinformation und eine Referenz auf das neu angelegte Objekt gespeichert wird. Beim evtl. späteren Löschen eines solchen Objektes wird der korrespondierende Eintrag in der Liste gelöscht. So steht stets eine aktuelle Aufstellung der verwendeten Basisobjekttypen zur Verfügung.

Die einzelnen Funktionalitäten 29, 32, 36 des Automatisierungswerkzeugs 27 sind dabei in an sich bekannter Weise vorteilhaft als separate Funktionseinheiten, z. B. als separate Module oder separate Unterprogramme, realisiert.

FIG 3 zeigt eine exemplarische Darstellung einer Ansicht der Bildschirmdarstellung des Automatisierungswerkzeugs 27 (FIG 2). Die Bildschirmdarstellung erfolgt unter Verwendung der heute allgemein gebräuchlichen Fenstertechnik, wobei in einem Auswahlfenster 37 eine Anzahl erster Basisobjekttypen 38, 39, 40, 41, 42 zur Auswahl angeboten werden. Die Darstellung einzelner Basisobjekttypen ist in nicht dargestellter Weise ggf. auch graphisch geeignet ausgestaltet, so dass die einzelnen Basisobjekttypen leicht voneinander unterschieden werden können. Zur Instanziierung eines ausgewählten Basisobjekttyps 38 - 42 wird dieser im Auswahlfenster 37 selektiert und in ein Arbeitsfenster 43 übernommen. Die Auswahl und das Übernehmen des Basisobjekttyps 38 - 42 erfolgt z. B. mit einem Zeigegerät, wie einer Maus, durch Anklicken und Verschieben (drag & drop).

Die ersten Basisobjekttypen 38 - 42 im Auswahlfenster 37 sind jeweils mit einer Funktionalität allgemeiner technischer Prozesse assoziiert. Auf einer untersten Abstraktionsstufe gilt es zunächst, den jeweiligen technischen Prozess 10 im Hinblick auf die zu verarbeitenden Ausgangsstoffe darzustellen.

Der Technologe kennt die benötigten Ausgangsstoffe. Beim technischen Prozess 10 der Porenbetonherstellung werden die Ausgangsstoffe Zement, Kalk, Sandschlamm, Wasser und Aluminium (vgl. FIG 1) benötigt. Zur Repräsentation dieser Ausgangsstoffe instanziiert der Technologe im Arbeitsfenster 43 die geeigneten Basisobjekttypen 38 - 42.

Ein spezieller erster Basisobjekttyp 38 repräsentiert z. B. einen fließfähigen Ausgangsstoff. Entsprechend werden zur Repräsentation der Ausgangsstoffe Zement und Kalk im Arbeitsfenster 43 Instanzen 44, 45 dieses speziellen ersten Basisobjekttyps 38 angelegt. Diese Instanzen 44, 45 werden im Folgenden auch als Zementobjekt 44 und Kalkobjekt 45 bezeichnet. Ein weiterer erster Basisobjekttyp 39 repräsentiert z. B. einen flüssigen Ausgangsstoff. Entsprechend werden zur Repräsentation der Ausgangsstoffe Sandschlamm und Wasser im Arbeitsfenster 43 Instanzen 46, 47 dieses Basisobjekttyps 39 angelegt. Diese Instanzen 46, 47 werden im Folgenden auch als Sandschlammobjekt 46 und Wasserobjekt 47 bezeichnet. Ein nochmals weiterer erster Basisobjekttyp 40 repräsentiert z. B. einen pulverisierten Ausgangsstoff. Entsprechend wird zur Repräsentation des Ausgangsstoffs Aluminium im Arbeitsfenster 43 eine Instanz 48 dieses Basisobjekttyps 40 angelegt. Diese Instanz 48 wird im Folgenden auch als Aluminiumobjekt 48 bezeichnet. Für z. B. feste oder gasförmige Ausgangsstoffe sind weitere vordefinierte Basisobjekttypen vorhanden, die für den technischen Prozess 10 der Porenbetonherstellung jedoch nicht benötigt werden.

Die Instanzen 44 - 48 zur Repräsentation der jeweiligen Ausgangsstoffe weisen ein oder mehrere, der jeweiligen Instanz dauerhaft zugeordnete Attribute 49, 50, 51, 52, 53 auf. Als Attribut 49 - 53 wird im Folgenden zusammenfassend sowohl ein einzelnes Attribut als auch die Gesamtheit aller einem Objekttyp oder einer daraus generierten Instanz zugeordneten Attribute bezeichnet.

Als Attribut 49 - 53 wird jeder Instanz z. B. eine Klartextbezeichnung des jeweils repräsentierten Ausgangsstoffs, also z. B. "Zement" , "Kalk" , "Sandschlamm" , "Wasser", "Aluminium" zugeordnet. Solche Attribute erleichtern die Unterscheidbarkeit einzelner Instanzen ansonsten identischer erster Basisobjekttypen 38 - 42.

Als weitere Attribute 49 - 53 können z. B. Mengenangaben vorgesehen sein. Der Technologe weiß bereits, wie groß die Form 24 (FIG 1) sein wird, d. h. welches Volumen sie aufnehmen kann. Je nach Rezept für Porenbeton unterschiedlicher Härte oder Dichte ergeben sich damit erforderliche Mischverhältnisse der Ausgangsstoffe sowie erforderliche Mengen, die in den jeweiligen Behältern 11, 12, 13, 14, 21 (FIG 1) für jeweils eine Mischung oder mehrere aufeinander folgende Mischungen zu bevorraten sind. Mit diesen Informationen kann der Technologe bereits den jeweiligen Objekten 44 - 48 Mengenangaben z. B. als Volumen oder als Gewicht zuordnen.

Die nachfolgende tabellarische Aufstellung gibt in einem Pseudocode eine Übersicht über den Umfang der Attribute 49, 50 der oben beschriebenen ersten Basisobjekttypen 38, 39, 40. Weitere oder äquivalente alternative Attribute sind denkbar:

| | | |
|---|---|---|
| Referenz | : | pointer |
| Bezeichnung | : | string |
| Menge | : | integer |

Das Attribut "Referenz" dient zur Zuordnung von Objekten, welche der Technologe anlegt, zu weiteren Objekten, die in nachfolgenden Abstraktionsstufen vom Konstrukteur oder Automatisierer oder gar automatisch durch das Automatisierungswerkzeug 27 (FIG 2) selbst angelegt werden. Eine Möglichkeit zur Herstellung einer solchen Zuordnung ist das Speichern der Adresse des jeweils referenzierten Objektes.

Weitere Basisobjekttypen 41, 42 repräsentieren z. B. verfahrenstechnische Maßnahmen, wie z. B. Heizen, Kühlen, Mischen, etc., die auf einzelne, einige oder alle Ausgangsstoffe angewendet werden sollen. Nachdem zur Porenbetonherstellung die Ausgangsstoffe gemischt werden sollen, wird ein nochmals weiterer erster Basisobjekttyp 41, der die verfahrenstechnische Maßnahme des Mischens repräsentiert, ausgewählt und im Arbeitsfenster 43 eine erste und eine zweite Instanz 54, 55 dieses Basisobjekttyps 41 angelegt. Diese Instanzen 54, 55 werden im Folgenden auch als erstes und zweites Mischobjekt 54, 55 bezeichnet.

Der Technologe weiß ferner, dass zunächst die Ausgangsstoffe Zement, Kalk, Sandschlamm und Wasser miteinander vermischt werden müssen und erst kurz bevor die Mischung in die Form 24 (FIG 1) abgezogen wird, der Ausgangsstoff Aluminium hinzugegeben werden darf. Das Vermischen der Ausgangsstoffe Zement, Kalk, Sandschlamm und Wasser erfordert eine gewisse Zeit, im Folgenden als Mischzeit bezeichnet. Wenn der Ausgangsstoff Aluminium während der gesamten Mischzeit mit den anderen Ausgangsstoffen in Kontakt wäre, würde sich der gewünschte Quelleffekt bereits im Mischer 19 (FIG 1) und nicht erst in der Form 24 einstellen. Darum wird der Ausgangsstoff Aluminium erst nach dem Ende der Mischzeit hinzugegeben und während einer Nachmischzeit mit den bereits vermischten anderen Ausgangsstoffen vermischt.

Zur Repräsentation dieser Gegebenheiten werden das Zementobjekt 44, das Kalkobjekt 45, das Sandschlammobjekt 46 und das Wasserobjekt 47 mit dem ersten Mischobjekt 54 und das Aluminiumobjekt 48 und das erste Mischobjekt 54 mit dem zweiten Mischobjekt 55 verknüpft. Eine Verknüpfung 56 der Instanzen der jeweiligen Basisobjekttypen, der Objekte, besteht im einfachsten Fall in einer Linienverbindung, die mit dem Zeigegerät angelegt wird. Die Verknüpfung 56 von Zement-44, Kalk- 45, Sandschlamm- 46 und Wasserobjekt 47 mit dem ersten Mischobjekt 54 repräsentiert das Vermischen dieser Ausgangsstoffe. Die Verknüpfung 56 von erstem Mischobjekt 54 und Aluminiumobjekt 48 mit dem zweiten Mischobjekt 55 repräsentiert das Vermischen bereits vermischter Ausgangsstoffe mit dem Ausgangsstoff Aluminium.

Jedem Mischobjekt 54, 55 sind dauerhaft jeweils ein oder mehrere Attribute 57, 58 zugeordnet. Als Attribut 57, 58 wird jedem Mischobjekt 54, 55 z. B. eine Klartextbezeichnung der jeweils repräsentierten verfahrenstechnischen Maßnahme, also z. B. "Mischen" bzw. "Nachmischen" zugeordnet. Für die beiden Mischobjekte 54, 55 ist unter Verwendung weiterer Attribute 57, 58 eine Angabe der jeweiligen Mischzeit sinnvoll.

Die nachfolgende tabellarische Aufstellung gibt eine Übersicht über den Umfang der Attribute 57, 58 des vierten Basisobjekttyps 41 oder jedes daraus instanziierten Mischobjektes 54, 55. Weitere oder äquivalente alternative Attribute sind denkbar:

| | | |
|---|---|---|
| Referenz | : | pointer |
| Bezeichnung | : | string |
| Mischzeit | : | integer |

Für Basisobjekttypen zur Repräsentation weiterer verfahrenstechnischer Maßnahmen, wie z. B. Heizen oder Kühlen, sind entsprechend geeignete Attribute z. B. zur Vorgabe einer Solltemperatur oder eines Temperaturprofils vorgesehen.

Auf diese Weise legt der Technologe unter Verwendung des Automatisierungswerkzeugs 27 (FIG 2) eine Beschreibung des technischen Prozesses 10 in einer ersten Abstraktionsstufe fest. Die damit zur Verfügung stehenden Daten verwendet der Konstrukteur zur weiteren Beschreibung des technischen Prozesses 10 in einer nächstfolgenden Abstraktionsstufe.

Der Konstrukteur geht von der vom Technologen angelegten Beschreibung des technischen Prozesses 10 aus und bekommt entsprechend bei Verwendung des Automatisierungswerkzeugs 27 (FIG 2) die angelegten und ggf. weitere, automatisch generierte Informationen in einer für ihn vorgesehenen Ansicht präsentiert. Jede vom Automatisierungswerkzeug 27 zur Verfügung gestellte Ansicht der Beschreibung des technischen Prozesses 10 korrespondiert mit einer Abstraktionsstufe dieser Beschreibung. Der Technologe beschreibt den technischen Prozess 10 in einer ersten Abstraktionsstufe z. B. mit Hinblick auf die erforderlichen Ausgangsstoffe. Zur Darstellung dieser Beschreibung ist die erste Ansicht vorgesehen. Der Konstrukteur beschreibt den technischen Prozess 10 in einer zweiten Abstraktionsstufe z. B. mit Hinblick auf Vorrichtungen, wie Behältnisse oder dgl., zur Bevorratung und zum Transport dieser Ausgangsstoffe. Zur Darstellung dieser Beschreibung ist die zweite Ansicht vorgesehen. Der Automatisierer schließlich beschreibt den technischen Prozess 10 in einer dritten Abstraktionsstufe z. B. mit Hinblick auf die Beeinflussbarkeit solcher Vorrichtungen durch eine Steuerung. Zur Darstellung dieser Beschreibung ist die dritte Ansicht vorgesehen.

FIG 4 zeigt eine automatisch durch das Automatisierungswerkzeug 27 (FIG 2) generierte Grobstruktur des technischen Prozesses 10, so wie sie dem Konstrukteur in der für ihn vorgesehenen Abstraktionsstufe und der damit korrespondierenden zweiten Ansicht präsentiert wird.

Beim Zement- 44, Kalk- 45, Sandschlamm- 46, Wasser- 47 und Aluminiumobjekt 48 (FIG 2) erkennt der Konstrukteur - ggf. unterstützt durch eine geeignete graphische Darstellung dieser Objekte -, dass es sich um Ausgangsstoffe für den technischen Prozess 10 handelt, die in geeigneter Form zu lagern oder zu bevorraten sind. Das Erfordernis zur Bereitstellung geeigneter Mittel zur Bevorratung der jeweiligen Ausgangsstoffe ist jedoch auch automatisch durch das Automatisierungswerkzeug 27 selbst erkennbar. Aufgrund der Tatsache, dass ein Zement- 44 und ein Kalkobjekt 45 als Instanz des ersten Basisobjekttyps zur Repräsentation fließfähiger Ausgangsstoffe angelegt sind, ist unmittelbar ableitbar, dass für jeden dieser fließfähigen Ausgangsstoffe ein geeignetes Behältnis zur Verfügung gestellt werden muss. Analog ergibt sich anhand des angelegten Sandschlamm- 46 und Wasserobjektes 47, dass für jeden dieser flüssigen Ausgangsstoffe ebenfalls entsprechende Behältnisse zur Verfügung gestellt werden müssen. Entsprechendes gilt in Bezug auf das Aluminiumobjekt 48. Schließlich ist anhand der beiden angelegten Mischobjekte 54, 55 die Notwendigkeit des Vorhandenseins zumindest eines Mischbehältnisses erkennbar.

Das Automatisierungswerkzeug 27 generiert also automatisch anhand der Beschreibung des technischen Prozesses 10 in der ersten Abstraktionsstufe eine Grobstruktur des technischen Prozesses in einer nächstfolgenden, zweiten Abstraktionsstufe. Dabei werden die Typinformationen der instanziierten Basisobjekttypen 38 - 41 berücksichtigt.

In der zweiten Abstraktionsstufe stehen eine Anzahl zweiter Basisobjekttypen 59, 60, 61, 62, 63 zur Verfügung. Das Automatisierungswerkzeug 27 generiert also anhand der Angaben des Technologen unter Zugriff auf jeweils geeignete zweite Basisobjekttypen 59 - 63 automatisch für jeden Ausgangsstoff ein Objekt 64, 65, 66, 67, 68 zur Repräsentation eines Behältnisses zu dessen Bevorratung und für jede verfahrenstechnische Maßnahme ein Objekt 69, 70 zur Repräsentation eines Behältnisses, in oder mit dem die jeweilige verfahrenstechnische Maßnahme stattfinden kann. Jedes Objekt 64 - 70 umfasst wiederum diesem dauerhaft zugeordnete Attribute 71, 72, 73, 74, 75, 76, 77.

Die nachfolgende tabellarische Aufstellung gibt eine Übersicht über den Umfang der Attribute 71 - 75, 76, 77 der Objekte 64 - 68, 69, 70 oder des zugrunde liegenden weiteren Basisobjekttyps. Weitere oder äquivalente alternative Attribute sind denkbar:

| | | |
|---|---|---|
| Referenz | : | pointer |
| Bezeichnung | : | string |
| Volumen | : | integer |
| Länge | : | integer |
| Höhe | : | integer |
| Breite | : | integer |
| Durchmesser | : | integer |

Das Attribut "Referenz" ermöglicht eine Zuordnung der Objekte 44 - 48, 54, 55 der Darstellung der ersten Abstraktionsstufe (vgl. FIG 2) zu den korrespondierenden Objekten 64 - 70 der zweiten Abstraktionsstufe. Eine Möglichkeit zur Herstellung einer solchen Zuordnung ist das Speichern der Adresse des jeweils referenzierten Objektes. Tatsächlich ergibt sich eine kreuzweise Referenzierung, da Objekte aus der ersten Abstraktionsstufe mit korrespondierenden Objekten in der zweiten Abstraktionsstufe und diese aber auch wieder selbst mit den korrespondierenden Objekten der ersten Abstraktionsstufe verknüpft sind. Dieses gilt analog auch für weitere Objekte in der dritten Abstraktionsstufe. Auf diese Weise sind ausgehend von jeder Abstraktionsstufe die jeweils korrespondierenden Objekte in anderen Abstraktionsstufen leicht aufzufinden.

Die automatisch generierten Objekte 64 - 68, 69, 70 verwendet der Konstrukteur zur weiteren Konkretisierung der Beschreibung des technischen Prozesses 10. Dazu gibt der Konstrukteur in dafür vorgesehenen Attributen 71 - 75, 76, 77 z. B. Länge, Breite und Höhe oder Höhe und Durchmesser des jeweils repräsentierten zukünftigen Behältnisses 11 - 14, 21 (FIG 1) vor. Der Konstrukteur orientiert sich bei der Festlegung der Werte solcher Attribute an dem erforderlichen Mindestvolumen und an dem vor Ort zur Verfügung stehenden Platz. Das Festlegen einzelner Werte von Attributen 71 - 75, 76, 77 eines Objektes erfolgt z. B., indem das Objekt mit dem Zeigegerät in an sich bekannter Weise selektiert wird und anschließend ein so genanntes Kontextmenü geöffnet wird, das einen Zugriff auf sämtliche oder ausgewählte oder auswählbare Attribute ermöglicht.

Wenn das Mischen des Ausgangsstoffs Aluminium mit den anderen bereits gemischten Ausgangsstoffen im selben Behältnis erfolgen soll, wird z. B. das automatisch zum zweiten Mischobjekt 55 (FIG 2) generierte Objekt 70 durch den Konstrukteur wieder gelöscht und manuell die Referenz angepasst, so dass das erste und das zweite Mischobjekt 54, 55 (FIG 2) beide das einzig verbleibende Objekt 69 zur Repräsentation eines Mischbehältnisses referenzieren.

Um die Ausgangsstoffe Zement und Kalk aus dem späteren Zement- bzw. Kalkbehälter 11, 12 (FIG 1) kontrolliert, d. h. in der erforderlichen Menge, abziehen zu können, ist ein gleichfalls kontrolliertes Öffnen und Schließen jeweils des späteren Zement- und Kalkbehälters 11, 12 erforderlich. Zu diesem Zweck wird der Konstrukteur steuerbare Vorrichtungen wie etwa ein Ventil oder eine Schnecke und ggf. ein Förderband o.ä. vorsehen, mit denen ein kontrolliertes Abziehen und Transportieren der Ausgangsstoffe Zement und Kalk möglich ist. Solche Vorrichtungen werden jedem zur Repräsentation eines Behältnisses 11 - 14, 21 (FIG 1) zur Bevorratung eines Ausgangsstoffs angelegten Objekt 64 - 68 zugeordnet. Die beiden Objekte 64, 65 werden im Folgenden zur Vereinfachung als Zement- 64 bzw. Kalkbehälterobjekt 65 bezeichnet. Die Beschreibung wird anhand dieser Objekte 64, 65 mit Bezug auf FIG 4 fortgeführt. Für andere Objekte gilt die weitere Beschreibung analog.

FIG 5 zeigt im Arbeitsfenster 43 des Automatisierungswerkzeugs 27 (FIG 2) einen Ausschnitt der Darstellung gemäß FIG 3. Dem Konstrukteur stehen in der für ihn vorgesehenen Ansicht des Automatisierungswerkzeugs 27 zweite Basisobjekttypen 59, 60, 61, 62, 63 zur Repräsentation beispielsweise solcher Vorrichtungen wie oben genannt zur Verfügung. Ein spezieller zweiter Basisobjekttyp 59 repräsentiert z. B. ein Ventil. Zum gesteuerten Abziehen der Ausgangsstoffe Zement und Kalk aus den jeweiligen Behältern 11, 12 (FIG 1) ist ein Ventil 15, 16 (FIG 1) geeignet. Der Konstrukteur legt daher zwei Instanzen 78, 79 des speziellen zweiten Basisobjekttyps 59 an und ordnet diese jeweils dem Zement- und Kalkbehälterobjekt 64, 65 zu, indem er entsprechende Verbindungen 56 vorsieht. Die beiden Instanzen 78, 79 des speziellen zweiten Basisobjekttyps 59 werden im Folgenden auch als Ventilobjekte 78, 79 bezeichnet. Jedes Ventilobjekt 78, 79 weist eigene, diesem jeweils dauerhaft zugeordnete Attribute 80, 81 auf. Mit den Attributen 80, 81 ist jedem Ventilobjekt 78, 79 eine Klartextbezeichnung, wie z. B. "Ventil Zementbehälterauslass" bzw. "Ventil Kalkbehälterauslass" zur erleichterten Unterscheidbarkeit zuordenbar. Ferner kann jedes Ventil drei Zustände annehmen, nämlich "geöffnet", "geschlossen" und "weder geöffnet noch geschlossen". Der spezielle zweite Basisobjekttyp 59 und entsprechend jedes Ventilobjekt 78, 79 als dessen Instanz umfasst zur Repräsentation dieser Zustände Attribute 80, 81 wie etwa "offen" und "geschlossen" des Typs "boolean" . Wenn das Attribut "offen" den Wert "True" annimmt, zeigt dies ein geöffnetes Ventil an. Wenn das Attribut "geschlossen" den Wert "True" annimmt, zeigt dies ein geschlossenes Ventil an. Wenn beide Attribute "offen" und "geschlossen" den Wert "False" annehmen, zeigt dies ein teilweise geöffnetes oder teilweise geschlossenes oder ein noch nicht vollständig geöffnetes oder noch nicht vollständig geschlossenes Ventil an. Zur Repräsentation der Möglichkeiten einer Ansteuerung eines Ventils weist das Ventilobjekt 78, 79 oder der zugrunde liegende spezielle zweite Basisobjekttyp 59 weitere Attribute 80, 81 wie etwa "öffnen" und "schließen" auf.

Die nachfolgende tabellarische Aufstellung gibt eine Übersicht über den Umfang der Attribute 80, 81 der Ventilobjekte 78, 79 oder des zugrunde liegenden speziellen zweiten Basisobjekttyps 59. Weitere oder äquivalente alternative Attribute sind denkbar:

| | | |
|---|---|---|
| Referenz | : | pointer |
| Bezeichnung | : | string |
| offen | : | boolean |
| geschlossen | : | boolean |
| öffnen | : | boolean |
| schließen | : | boolean |

Zum Vermischen der Ausgangsstoffe im späteren Mischer 19 (FIG 1) ist ein Motor 20 (FIG 1) zum Antrieb des Mischerflügels erforderlich. Zur Repräsentation dieser Gegebenheiten ist dem Objekt 69 zur Repräsentation des Mischbehältnisses ein Motorobjekt 82 als Instanz z. B. eines weiteren zweiten Basisobjekttyps 60 zugeordnet. Der repräsentierte, spätere Motor 20 kann ein- und ausgeschaltet werden, weshalb ein Attribut 83 wie etwa "Betrieb" vorgesehen ist, um diese beiden möglichen Zustände des Motors abzubilden.

Die nachfolgende tabellarische Aufstellung gibt eine Übersicht über den Umfang der Attribute 83 des Motorobjektes 82 oder des zugrunde liegenden weiteren, zweiten Basisobjekttyps 60. Weitere oder äquivalente alternative Attribute sind denkbar:

| | | |
|---|---|---|
| Referenz | : | pointer |
| Bezeichnung | : | string |
| Betrieb | : | boolean |

Der Konstrukteur ergänzt die Beschreibung des technischen Prozesses 10 bedarfsweise um Repräsentationen weiterer solcher Vorrichtungen wie Ventile o.ä. So kann z. B. eine Füllstandsüberwachung mit einem Grenzwertmelder realisiert werden. Zur Repräsentation eines Grenzwertmelders legt der Konstrukteur Objekte eines entsprechenden zweiten Basisobjekttyps 59 - 63 an und ordnet diese in geeigneter Weise anderen Objekten, z. B. dem Zement- oder Kalkbehälterobjekt 64, 65, zu. Hinsichtlich weiterer, hier nicht erwähnter Vorrichtungen wird analog verfahren. Daneben legt der Konstrukteur zumindest teilweise z. B. auch Endschalter oder Bedienelemente fest und sieht dafür entsprechende geeignete Objekte zu deren Repräsentation vor.

Auf diese Weise legt der Konstrukteur unter Verwendung des Automatisierungswerkzeugs 27 eine Beschreibung des technischen Prozesses 10 in der zweiten Abstraktionsstufe fest. Die damit zur Verfügung stehenden Daten verwendet der Automatisierer zur weiteren Beschreibung des technischen Prozesses 10 in der dritten Abstraktionsstufe.

Der Automatisierer geht von der vom Konstrukteur angelegten Beschreibung des technischen Prozesses 10 aus und bekommt entsprechend bei Verwendung des Automatisierungswerkzeugs 27 die angelegten und ggf. weitere, automatisch generierte Informationen in einer für ihn vorgesehenen Ansicht präsentiert. Die vom Konstrukteur angelegten Objekte 78, 79, 82 umfassen mit ihren jeweiligen Attributen 80, 81, 83 bereits einen Großteil der Zustände des später gesteuerten und/oder überwachten technischen Prozesses 10 wie z. B. "Ventil offen" oder "Motor ein". Ferner umfassen sie wesentliche Einflussmöglichkeiten auf steuerbare Vorrichtungen im technischen Prozess 10 wie z. B. "Ventil schließen" oder "Motor aus". Damit kann aus der vom Konstrukteur angelegten Beschreibung des technischen Prozesses automatisch durch das Automatisierungswerkzeug 27 das so genannte Prozessabbild mit dem Prozessabbild der Eingänge (z. B. "Ventil Kalkbehälter geschlossen", etc.) und dem Prozessabbild der Ausgänge (z. B. "Motor Mischer aus", etc.) generiert werden.

Der Automatisierer legt in einer für ihn vorgesehenen Ansicht des Automatisierungswerkzeugs 27 erforderliche weitere Objekte zur Repräsentation von z. B. Bedien- oder Schaltgeräten an und eine Zuordnung der einzelnen Prozesszustände zu physikalischen Ein- und Ausgängen der späteren Steuerungshardware, z. B. einer speicherprogrammierbaren Steuerung, fest. Des Weiteren legt der Automatisierer eine Verknüpfung z. B. der Prozesszustände mit internen Zuständen fest. Dies wird nachfolgend mit Bezug auf FIG 5 näher erläutert.

FIG 6 zeigt eine automatisch durch das Automatisierungswerkzeug 27 (FIG 2) generierte Grobstruktur des technischen Prozesses 10, so wie sie dem Automatisierer in der für ihn vorgesehenen Abstraktionsstufe präsentiert wird. Diese Grobstruktur umfasst ein erstes und ein zweites Ventilansteuerungsobjekt 84, 85 sowie ein Motoransteuerungsobjekt 86 mit jeweils zugeordneten Attributen 87, 88, 89. Diese Objekte sind entweder Instanzen eines in der dem Automatisierer vorbehaltenen Ansicht zur Verfügung stehenden dritten Basisobjekttyps 90, 91, 92, 93, 94 oder eine andere, auf die dem Automatisierer vorbehaltene Ansicht abgestellte, geeignete Darstellung der Ventilobjekte 78, 79 bzw. des Motorobjektes 82 (FIG 4). Im ersten Fall erzeugt das Automatisierungswerkzeug 27 die zusätzlichen Objekte, im zweiten Fall bewirkt das Automatisierungswerkzeug 27 die geeignete Darstellung.

Der Automatisierer konkretisiert die Grobstruktur, indem er als Instanz eines geeigneten dritten Basisobjekttyps 90 - 94 ein Automatisierungsobjekt 95 zur Repräsentation z. B. einer speicherprogrammierbaren Steuerung oder eines dezentralen Peripheriegerätes, zusammenfassend als Steuerung bezeichnet, anlegt. Ein solche spätere Steuerung beeinflusst nach Maßgabe eines Anwenderprogramms den technischen Prozess 10, indem Prozesszustände als Prozesseingänge gelesen werden und in Abhängigkeit von diesen Prozesszuständen und weiteren internen Zuständen Prozessausgänge gesetzt oder zurückgesetzt werden, um z. B. einen Motor ein- oder auszuschalten. Die Verbindungen 56 zwischen den einzelnen Objekten 84, 85, 86 und dem Automatisierungsobjekt 95 zeigen an, welche Objekte 84, 85, 86 durch das Automatisierungsobjekt 95 beeinflusst werden, und legen damit fest, welche konkreten Vorrichtungen, wie Ventile o.ä., im späteren technischen Prozess durch die durch das Automatisierungsobjekt 95 repräsentierte Steuerung beeinflusst werden. Das Automatisierungsobjekt 95 umfasst als Attribut 96 zumindest das Prozessabbild der Eingänge, das Prozessabbild der Ausgänge sowie einen Merkerspeicherbereich zum Zwischenspeichern von internen Zuständen. Mit der Verbindung 56 des Automatisierungsobjektes 95 mit anderen Objekten 84, 85, 86 kann automatisch durch das Automatisierungswerkzeug 27 anhand der diesen Objekten 84, 85, 86 im Rahmen der jeweiligen Attribute 87, 88, 89 zugeordneten Zustände und Einflussmöglichkeiten das Prozessabbild der Eingänge und das Prozessabbild der Ausgänge für das Automatisierungsobjekt 95 erzeugt werden.

Der Automatisierer ordnet durch Aufruf z. B. eines dem Attribut 96 des Automatisierungsobjektes 95 zugeordneten Kontextmenüs die einzelnen Zustände und Einflussmöglichkeiten physikalischen Adressen, die wiederum mit einer Beschaltung der späteren Steuerung korrespondieren, zu. Ebenso ist denkbar, dass eine solche Zuordnung bereits in Bezug auf die Attribute 87, 88, 89 der Ventilansteuerungsobjekte 84, 85 und des Motoransteuerungsobjekts 86 erfolgt. In diesem Fall werden nicht nur die Zustände und Einflussmöglichkeiten, sondern auch die getroffenen Zuordnungen automatisch in das Attribut 96 des Automatisierungsobjektes 95 übernommen.

Der Automatisierer plant nunmehr das spätere Steuerprogramm 26 (FIG 2) und sieht dafür interne Zustände wie z. B. "Automatikbetrieb" und "Mischer füllen" vor. Solche internen Zustände werden in an sich bekannter Weise als Merker abgebildet. Unter Verwendung dieser oder ähnlicher interner Zustände, selbstverständlich aber auch unter Verwendung "echter" Prozessein- und -ausgänge können nunmehr einzelne Elemente des späteren Steuerprogramms 26 sukzessive erstellt werden. Wenn im späteren Betrieb des technischen Prozesses der interne Zustand "Mischer füllen" ansteht, bedeutet dies, dass die jeweiligen Ausgangsmaterialien aus den jeweiligen Behältnissen 11 - 14, 21 (FIG 1) in den Mischer 19 (FIG 1) abgezogen werden sollen. In einem dafür vorgesehenen Abschnitt des Attributs 87, 88 der beiden Ventilansteuerungsobjekte 84, 85 wird entsprechend eine Programmanweisung hinterlegt, die in einem Pseudocode etwa folgendes Format hat: "WENN [Automatik] UND [Mischer füllen] DANN [Ventil öffnen]". "Automatik" und "Mischer füllen" sind globale Variable, die für das Automatisierungsobjekt 95 und die dadurch beeinflussten Objekte 84, 85, 86 Gültigkeit haben. "Ventil öffnen" ist ein Attribut 87, 88 des jeweiligen Ventilansteuerungsobjektes 84, 85, aber auch ein Prozessausgang und beeinflusst damit das spätere konkrete Ventil 15, 16 (FIG 1) selbst.

Wenn zu einem späteren Zeitpunkt, zu dem etwa die Planung des technischen Prozesses bereits einige Fortschritte erfahren hat, der Technologe einen weiteren Ausgangsstoff vorsehen möchte, etwa anstelle nur einer Kalksorte eine erste und zweite Kalksorte, instanziiert er in der ihm vorbehaltenen Ansicht die entsprechenden Objekte. Diese Änderungen sind für den Konstrukteur in dessen Ansicht sofort sichtbar, weil nämlich das Automatisierungswerkzeug 27 z. B. automatisch ein zusätzliches Objekt zur Repräsentation eines Behältnisses zur Aufnahme einer zusätzlichen Kalksorte generiert. Dies berücksichtigt der Konstrukteur, indem er diesem Behältnis ein Ventil zum gesteuerten Abziehen von Ausgangsmaterial zuordnet. Dieses zusätzliche Ventil erscheint automatisch in der dem Automatisierer vorbehaltenen Ansicht. Der Automatisierer verknüpft das neue Objekt mit einem Automatisierungsobjekt, was unmittelbar eine geeignete Anpassung des Prozessabbildes der Ein- und Ausgänge nach sich zieht, denn mit jedem zusätzlichen Ventil ergeben sich zwei zusätzliche Prozesseingänge ("Ventil offen", "Ventil geschlossen") und zwei zusätzliche Prozessausgänge ("Ventil öffnen", "Ventil schließen"). Zur Bedienung dieser Prozessein- und -ausgänge sieht der Automatisierer in dem neuen Objekt geeignete Programmanweisungen vor.

Wenn, z. B. ausgehend von der Beschreibung eines bereits realisierten technischen Prozesses, ein Ausgangsmaterial entfällt, etwa anstelle zuvor vorgesehener drei verschiedener Zementsorten nur eine einzige Zementsorte, kann der Technologe die Repräsentation der beiden nicht benötigten Ausgangsstoffe löschen, wodurch unmittelbar ein Löschen von zugeordneten Ventilen in der dem Konstrukteur vorbehaltenen Ansicht und ein Löschen von Prozesszuständen und Einflussmöglichkeiten sowie zugeordneten Programmcodes in der dem Automatisierer vorbehaltenen Ansicht erfolgt.

Ein in einer Abstraktionsstufe verwendetes oder angelegtes Objekt und ein in einer anderen Abstraktionsstufe zugeordnetes Objekt müssen nicht notwendigerweise Instanzen verschiedener Objekttypen sein. Tatsächlich kann auch vorgesehen sein, dass z. B. zur Repräsentation eines flüssigen Ausgangsstoffs und zur Repräsentation eines Behältnisses zur Bevorratung eines solchen flüssigen Ausgangsstoffs ein Objekt eines einzigen geeigneten Basisobjekttyps instanziiert wird und in unterschiedlichen Ansichten, die das Automatisierungswerkzeug 27 ermöglicht, jeweils nur ein geeigneter Teil der Daten eines solchen Objektes dargestellt wird; etwa in der dem Technologen vorbehaltenen Ansicht Daten zu Art und Menge des Ausgangsstoffs und der dem Konstrukteur vorbehaltenen Ansicht Daten zu Ausmaßen des Behälters. Tatsächlich ist es durch die Definition der verwendbaren Basisobjekttypen bestimmt, ob zu einem Objekt in einer ersten Ansicht/Abstraktionsstufe automatisch ein korrespondierendes, weiteres Objekt in einer nächstfolgenden Abstraktionsstufe generiert wird oder ob die verfügbaren Basisobjekttypen bereits sämtliche Daten ansonsten automatisch generierter, weiterer Objekte umfassen und entsprechend in einer nächstfolgenden Abstraktionsstufe/Ansicht nur vorgegebene oder vorgebbare andere Daten zur Anzeige gelangen. Zur Definition benutzerspezifischer Basisobjekttypen oder zur Erweiterung oder Anpassung bereits bestehender Basisobjekttypen weist das Automatisierungswerkzeug 27 eine entsprechende geeignete Funktionalität auf.

Damit lässt sich die Erfindung kurz wie folgt darstellen: Es wird ein Automatisierungswerkzeug 27 und ein unter dessen Verwendung ausführbares, korrespondierendes Verfahren zur Unterstützung einer Planung und Realisierung eines automatisierten technischen Prozesses 10 mit einem Zugriff auf eine Bibliothek mit einer Anzahl vordefinierter, mit einer Funktionalität eines technischen Prozesses assoziierter Basisobjekttypen 38 - 42; 59 - 63; 90 - 94 angegeben, das eine Funktionalität zum Erzeugen und untereinander Verknüpfen von Instanzen der Basisobjekttypen 38 - 42; 59 - 63; 90 - 94 und eine Funktionalität zum Ableiten einer Strukturinformation in Bezug auf den technischen Prozess 10 aus einer Typinformation jedes instanziierten Basisobjekttyps 38 - 42; 59 - 63; 90 - 94 bietet.

Mit dem Automatisierungswerkzeug 27 wird der Prozess der Planung und Realisierung des technischen Prozesses 10 durchgängig unterstützt. Die Planung und Realisierung wird in drei Abstraktionsstufen aufgeteilt. Für jede Abstraktionsstufe steht im Automatisierungswerkzeug 27 eine Ansicht zur Verfügung. In jeder Abstraktionsstufe/Ansicht beschreibt ein Spezialist - zunächst ein Technologe, dann ein Konstrukteur und schließlich ein Automatisierer - den technischen Prozess 10. Jeder Spezialist legt in der für ihn vorgesehenen Ansicht eine Anzahl von Objekten als Instanzen von ersten bzw. zweiten oder dritten Basisobjekttypen 38 - 42; 59 - 63; 90 - 94 an und verknüpft diese nach den Erfordernissen des technischen Prozesses 10 geeignet miteinander. Jeder Basisobjekttyp 38 - 42; 59 - 63; 90 - 94 ist dabei mit einer Funktionalität des technischen Prozesses 10 assoziiert. So steht z. B. ein Basisobjekttyp 38 - 42; 59 - 63; 90 - 94 zur Repräsentation jeweils eines Ausgangsstoffes, ein Basisobjekttyp 38 - 42; 59 - 63; 90 - 94 zur Repräsentation eines Behältnisses zu dessen Bevorratung, ein Basisobjekttyp 38 - 42; 59 - 63; 90 - 94 zur Repräsentation eines Ventils, einer Schnecke oder dergleichen, ein Basisobjekttyp 38 - 42; 59 - 63; 90 - 94 zur Repräsentation einer Ventil- oder Motoransteuerung und ein Basisobjekttyp 38 - 42; 59 - 63; 90 - 94 zur Repräsentation einer Steuerung zur Verfügung.

Es ergibt sich damit eine vollständige Beschreibung des technischen Prozesses 10 in technologischer Hinsicht (erste Abstraktionsstufe), in konstruktiver, maschinenbaulicher Hinsicht (zweite Abstraktionsstufe) und in automatisierungstechnischer Hinsicht (dritte Abstraktionsstufe). Aus den Daten können ein Materialflussplan, konstruktive Daten und ein Steuerprogramm 26 abgeleitet werden. Das Steuerprogramm 26 kann mit wenigen oder keinen Änderungen zur Steuerung und/oder Überwachung des technischen Prozesses direkt in eine Steuerung übertragen werden. Durch die enge Verzahnung der Beschreibung der einzelnen Abstraktionsstufen lassen sich Anpassungen oder Änderungen leicht und transparent einbringen.

## Patentansprüche

1. Verfahren zur Unterstützung einer Planung und Realisierung eines automatisierten technischen Prozesses (10) unter Verwendung eines Automatisierungswerkzeugs (27), das Zugriff auf eine Bibliothek (28) mit einer Anzahl vordefinierter, mit einer Funktionalität eines technischen Prozesses (10) assoziierter Basisobjekttypen (38 - 42; 59 - 63; 90 - 94) hat, wobei mit dem Automatisierungswerkzeug Instanzen der Basisobjekttypen (38 - 42; 59 - 63; 90 - 94) erzeugt und gemäß den Erfordernissen des technischen Prozesses (10) geeignet untereinander verknüpft werden,
**dadurch gekennzeichnet,**
**dass** durch das Automatisierungswerkzeug aus den instanziierten Basisobjekttypen (38 - 42; 59 - 63; 90 - 94) und insbesondere deren Verknüpfung untereinander eine Strukturinformation (30, 31) in Bezug auf den technischen Prozess (10) abgeleitet wird,
**dass** aus einer ersten Instanziierung einer Anzahl (33) erster Basisobjekttypen (38 - 42) als Strukturinformation (30, 31) eine erste Strukturinformation (30) mit Hinblick auf die im technischen Prozess (10) ver- oder bearbeiteten Ausgangsstoffe oder Materialien und mit Hinblick auf Vorrichtungen zu deren Aufnahme und Transport abgeleitet wird,
**dass** zu der ersten Strukturinformation (31) eine Anzahl (34) zweiter Basisobjekttypen (59 - 63) instanziiert werden und dass aus dieser zweiten Instanziierung einer Anzahl (34) zweiter Basisobjekttypen (59 - 63) als Strukturinformation (30, 31) eine zweite Strukturinformation (31) mit Hinblick auf die Beeinflussbarkeit solcher Vorrichtungen durch eine Steuerung (25) abgeleitet wird.

2. Verfahren nach Anspruch 1, wobei zu jedem instanziierten Basisobjekttyp (38 - 42; 59 - 63; 90 - 94) eine durch den jeweiligen Basisobjekttyp (38 - 42; 59 - 63; 90 - 94) vorgegebene Anzahl von Attributen (49 - 53; 57 - 58; 71 - 77; 80, 81; 83; 87 - 89; 96) bedarfsweise mit einem Wert und/oder einem Darstellungsformat versehen wird.

3. Verfahren nach Anspruch 1 oder 2, wobei die Bibliothek (28) als Basisobjekttypen (38 - 42; 59 - 63; 90 - 94) erste Basisobjekttypen (38 - 42), die vor der Ableitung der ersten Strukturinformation (30), zweite Basisobjekttypen (59 - 63), die vor der Ableitung der zweiten Strukturinformation (31), und dritte Basisobjekttypen (90 - 94), die nach der Ableitung der zweiten Strukturinformation (31) zur Instanziierung zur Verfügung stehen, umfasst.

4. Verfahren nach Anspruch 3, wobei Auswahl, Instanziierung der ersten, zweiten und dritten Basisobjekttypen (38 - 42; 59 - 63; 90 - 94) und deren Verknüpfung untereinander jeweils in einer ersten, zweiten und dritten Sicht erfolgt.

5. Verfahren nach Anspruch 2 und 4, wobei durch das Darstellungsformat auch die Sichtbarkeit eines Attributes (49 - 53; 57 - 58; 71 - 77; 80, 81; 83; 87 - 89; 96) in der ersten, zweiten oder dritten Sicht festgelegt wird.

6. Verfahren nach einem der Ansprüche 1 bis 5, wobei zu der zweiten Strukturinformation (31) eine Anzahl (35) dritter Basisobjekttypen (90 - 94) instanziiert werden, so dass mindestens ein Automatisierungsobjekt (95) angelegt ist, wobei das Automatisierungsobjekt (95) mit einer den technischen Prozess (10) oder Teilprozess steuernden Steuerung (26) korrespondiert und wobei ein Attribut (96) des Automatisierungsobjektes (95) ein Prozessabbild der Eingänge des technischen Prozesses (10) und ein Prozessabbild der Ausgänge des technischen Prozesses (10) umfasst.

7. Verfahren nach Anspruch 6, wobei das Prozessabbild der Eingänge und das Prozessabbild der Ausgänge anhand der Attribute (87 - 89) der dritten Basisobjekttypen (90 - 94) ermittelt werden.

8. Verfahren nach Anspruch 6 oder 7, wobei jeder Instanz eines dritten Basisobjekttyps (90 - 94) in dessen Attribut (87 - 89) ein Programmcode zur Ansteuerung der jeweils repräsentierten Vorrichtung zugeordnet wird.

## Claims

1. Method for supporting planning and implementation of an automated technical process (10) using an automation tool (27) that has access to a library (28) containing a number of predefined basic object types (38 - 42; 59 - 63; 90 - 94) associated with a functionality of a technical process (10), whereby the automation tool is used to generate instances of the basic object types (38 - 42; 59 - 63; 90 - 94) and to link them to one another suitably in accordance with the requirements of the technical process (10), **characterised in that**
thanks to the automation tool, structure information (30, 31) referring to the technical process (10) is derived from the instantiated basic object types (38 - 42; 59 - 63; 90 - 94) and especially their links to one another,
first structure information (30) relating to the processed or worked raw substances or materials and to devices for picking and transporting them is derived from a first instantiation of a number (33) of first basic object types (38 - 42) as structure information (30, 31),
in respect of the first structure information (31) a number (34) of second basic object types (59 - 63) are instantiated and that from this second instantiation of a number (34) of second basic object types (59 - 63) as structure information (30, 31) second structure information (31) relating to the ability of a controller (25) to influence such devices is derived.

2. Method according to claim 1, whereby a number of attributes (49 - 53; 57 - 58; 71 -77; 80, 81; 83; 87 - 89; 96) predefined by the respective basic object type (38 - 42; 59 - 63; 90 - 94) are provided as required with a value and/or a display format for each instantiated basic object type (38 - 42; 59 - 63; 90 - 94).

3. Method according to claim 1 or 2, whereby as basic object types (38 - 42; 59 - 63; 90 - 94) the library (28) contains first basic object types (38 - 42) available for instantiation before derivation of the first structure information (30), second basic object types (59 - 63) available for instantiation before derivation of the second structure information (31), and third basic object types (90 - 94) available for instantiation after derivation of the second structure information (31).

4. Method according to claim 3, whereby selection, instantiation of the first, second and third basic object types (38 - 42; 59 - 63; 90 - 94) and their links to one another take place respectively in a first, second and third view.

5. Method according to claims 2 and 4, whereby the visibility of an attribute (49 - 53; 57 - 58; 71 -77; 80, 81; 83; 87 - 89; 96) is also determined in the first, second or third view by the display format.

6. Method according to one of claims 1 to 5, whereby a number (35) of third basic object types (90 - 94) is instantiated for the second structure information (31), so that at least one automation object (95) is created, whereby the automation object (95) corresponds to a controller (26) controlling the technical process (10) or subprocess and whereby an attribute (96) of the automation object (95) includes a process image of the inputs of the technical process (10) and a process image of the outputs of the technical process (10).

7. Method according to claim 6, whereby the process image of the inputs and the process image of the outputs are determined on the basis of the attributes (87 - 89) of the third basic object types (90 - 94).

8. Method according to claim 6 or 7, whereby each instance of a third basic object type (90 - 94) is assigned a program code in its attribute (87 - 89) to control the respective device represented.

## Revendications

1. Procédé d'aide à la planification et à la réalisation d'un processus technique automatisé ( 10 ) en utilisant un outil d'automatisation ( 27 ) qui a accès à une bibliothèque ( 28 ) ayant un certain nombre de types d'objets de base prédéfinis ( 38 à 42 ; 59 à 63 ; 90 à 94 ) associés à une fonctionnalité d'un processus technique ( 10 ),
des instances des types d'objets de base ( 38 à 42 ; 59 à 63 ; 90 à 94 ) étant produites avec l'outil d'automatisation et étant combinées entre elles de manière appropriée selon les exigences du processus technique ( 10 ),
**caractérisé par le fait que**
l'outil d'automatisation déduit des types d'objets de base instanciés ( 38 à 42 ; 59 à 63 ; 90 à 94 ) et notamment de leur combinaison une information de structure ( 30, 31 ) par rapport au processus technique ( 10 ),
d'une première instanciation d'un certain nombre ( 33 ) de premiers types d'objets de base ( 38 à 42 ), on déduit comme information de structure ( 30, 31 ) une première information de structure ( 30 ) eu égard aux produits ou matériaux de départ traités ou usinés dans le processus technique ( 10 ) et eu égard à des dispositifs destinés à leur réception et à leur transport,
pour la première information de structure ( 31 ), on instancie un certain nombre ( 34 ) de deuxièmes types d'objets de base ( 59 à 63 ), et
de cette deuxième instanciation d'un certain nombre ( 34 ) de deuxièmes types d'objets de base ( 59 à 63 ), on déduit comme information de structure ( 30, 31 ) une deuxième information de structure ( 31 ) eu égard à la possibilité d'influencer des dispositifs de ce genre au moyen d'une commande ( 25 ).

2. Procédé selon la revendication 1, dans lequel, pour chaque type d'objet de base instancié ( 38 à 42 ; 59 à 63 ; 90 à 94 ), on munit si nécessaire d'une valeur et/ou d'un format de présentation un certain nombre, prédéterminé par le type d'objet de base instancié ( 38 à 42 ; 59 à 63 ; 90 à 94 ) respectif, d'attributs ( 49 à 53 ; 57 à 58 ; 71 à 77 ; 80, 81 ; 83 ; 87 à 89 ; 96 ).

3. Procédé selon la revendication 1 ou 2, dans lequel la bibliothèque ( 28 ) comprend comme types d'objets de base ( 38 à 42 ; 59 à 63 ; 90 à 94 ) des premiers types d'objets de base ( 38 à 42 ) qui sont disponibles pour l'instanciation avant la déduction de la première information de structure ( 30 ), des deuxièmes types d'objets de base ( 59 à 63 ) qui sont disponibles pour l'instanciation avant la déduction de la deuxième information de structure ( 31 ) et des troisièmes types d'objets de base ( 90 à 94 ) qui sont disponibles pour l'instanciation après la déduction de la deuxième information de structure ( 31 ).

4. Procédé selon la revendication 3, dans lequel la sélection et l'instanciation des premiers, deuxièmes et troisièmes types d'objets de base ( 38 à 42 ; 59 à 63 ; 90 à 94 ) ainsi que leur combinaison s'effectuent respectivement dans une première, deuxième et troisième vue.

5. Procédé selon les revendications 2 et 4, dans lequel le format de présentation spécifie aussi la visibilité d'un attribut ( 49 à 53 ; 57 à 58 ; 71 à 77 ; 80, 81 ; 83 ; 87 à 89 ; 96 ) dans la première, deuxième ou troisième vue.

6. Procédé selon l'une des revendications 1 à 5, dans lequel, pour la deuxième information de structure ( 31 ), on instancie un certain nombre ( 35 ) de troisièmes types d'objets de base ( 90 à 94 ) de manière à construire au moins un objet d'automatisation ( 95 ), l'objet d'automatisation ( 95 ) correspondant à une commande ( 26 ) commandant le processus technique ( 10 ) ou un processus partiel et un attribut ( 96 ) de l'objet d'automatisation ( 95 ) comprenant une image de processus des entrées du processus technique ( 10 ) et une image de processus des sorties du processus technique ( 10 ).

7. Procédé selon la revendication 6, dans lequel on détermine l'image de processus des entrées et l'image de processus des sorties à l'aide des attributs ( 87 à 89 ) des troisièmes types d'objets de base ( 90 à 94 ).

8. Procédé selon la revendication 6 ou 7, dans lequel on associe à chaque instance d'un troisième type d'objet de base ( 90 à 94 ), dans l'attribut ( 87 à 89 ) de celui-ci, un code de programme pour la commande du dispositif respectivement représenté.
